## Europäisches Patentamt
## European Patent Office
## Office européen des brevets

(11) Veröffentlichungsnummer: **0 209 103**
**B1**

(12) **EUROPÄISCHE PATENTSCHRIFT**

(45) Veröffentlichungstag der Patentschrift:
**14.06.89**

(21) Anmeldenummer: **86109642.8**

(22) Anmeldetag: **14.07.86**

(51) Int. Cl.⁴: **B65D 65/40, B65D 85/76, C09J 7/02**

(54) **Folie mit kombinierter Siegel- und Ablösebeschichtung.**

(30) Priorität: **15.07.85  CH 3055/85**

(43) Veröffentlichungstag der Anmeldung:
**21.01.87 Patentblatt 87/4**

(45) Bekanntmachung des Hinweises auf die Patenterteilung:
**14.06.89 Patentblatt 89/24**

(84) Benannte Vertragsstaaten:
**AT DE FR IT**

(56) Entgegenhaltungen:
**CA-A- 876 065**
**CH-A- 257 417**
**US-A- 4 370 369**

(73) Patentinhaber: **Nyffeler, Corti AG, CH-3422 Kirchberg BE(CH)**

(72) Erfinder: **Kilchenmann, Urs, Tschiffeliweg 2, CH-3422 Kirchberg(CH)**

(74) Vertreter: **Barz, Peter, Dr. et al, Patentanwälte Dipl.-Ing. G. Dannenberg Dr. P. Weinhold, Dr. D. Gudel Dipl.-Ing. S. Schubert, Dr. P. Barz Siegfriedstrasse 8, D-8000 München 40(DE)**

ACTORUM AG

## Beschreibung

Pastöse Packgüter wie z.B. Schmelzkäse weisen oft die für den Verbraucher unangenehme Eigenschaft auf, dass sie an den Wänden der Verpackung anhaften und deshalb nicht oder nur schwierig aus ihr herauszulösen sind. Diesem Umstand wird im allgemeinen damit begegnet, dass die Verpackungsfolie auf der Innenseite mit einem dünnen Film aus ungiftigem wasserlöslichem Material überzogen wird, beispielsweise auf der Basis wasserlöslicher Stärke. Durch die wässerige Phase an der Packgutoberfläche wird nach dem Verpackungsvorgang der wasserlösliche Film aufgeweicht, so dass beim Entnehmen des Packgutes ein Ablöseeffekt entsteht, indem der wasserlösliche Film durch Kohäsionsbruch geteilt wird in einem Filmteil, der der Packgutoberfläche anhaftet und einen Filmteil, der auf der Packstoffoberfläche verbleibt.

Für gewisse Anwendungen ist diese Problemlösung vollauf genügend, jedoch nicht für Packungen mit langen Umschlagszeiten und für Packgüter, die sehr leicht Feuchtigkeit verlieren. In diesen Fällen sind wasserdampfdichte Verpackungen erforderlich, das setzt auch dichte Nähte voraus. Bei Folienverpackungen ist es üblich, dichte Nähte mittels Heissiegelung zu erzeugen. Bislang sind aber keine Heissiegelbeschichtungen bekannt, die zugleich Ablöseeigenschaften aufweisen. Man suchte deshalb die Aufgabe so zu erfüllen, dass man auf die Folien zuerst eine Heissiegelschicht und über diese einen dünnen Trennfilm auftrug. Diese Trennschicht, so dünn sie auch aufgetragen wurde, verhinderte jedoch die vollständige Verbindung der beiden Heissiegelschichten, so dass keine ideal dichten Heissiegelnähte erzeugt werden konnten. Neben der genannten Problematik trat eine weitere Schwierigkeit auf: Gewisse Packgüter lassen sich trotz des Ablösefilms nur schwer der Verpackung entnehmen.

Die Aufgabe der Erfindung besteht somit darin, einen Packstoff zu schaffen, der sowohl die Herstellung ideal dichter Siegelnähte ermöglicht, als auch gleichzeitig die Eigenschaft aufweist, sich leicht von einem pastösen Packgut mit wässriger Phase abzulösen. Da keine Materialien bekannt sind, die gleichzeitig gute Siegel- und Ablöseeigenschaften aufweisen, wurde die Erfindung auf der Basis von zwei verschiedenen Schichten aufgebaut, von denen jede eine Teillösung erfüllt.
Leitidee war dabei, die Fläche so aufzuteilen, dass jede Schicht ihre Aufgabe möglichst ideal erfüllt.

Bei zentriert bedruckten Fläche wäre es ohne weiteres möglich, genau die Nahtbereiche nicht mit Ablösefilm zu bedecken. Vielfach werden aber solche Folien wie sie beispielsweise zum Verpacken von Schmelzkäse verwendet werden, nicht bedruckt. Die meisten solchen Verpackungsmaschinen sind auch nicht mit einer Fotozellen-Tastmarkensteuerung ausgerüstet.

Versuche haben überraschend gezeigt, dass Packgüter, die besonders starke Neigung zum Ankleben aufweisen, sich auch dann leicht ablösen lassen, wenn der Ablösefilm nicht vollflächig aufgetragen wird. Ferner zeigte sich, dass das Flächenverhältnis zwischen mit Ablösefilm bedeckter Folienoberfläche zu nicht solcherart bedeckter für den Ablöseeffekt von ausschlaggebender Bedeutung ist. Durch Versuche wurde ermittelt, dass der gewünschte Effekt zwischen 30 % und 60 % Flächenbedeckung mit Ablösefilm, vorzugsweise 43,75 % am deutlichsten zu beobachten ist. Dabei müssen selbstverständlich die Flächenanteile regelmässig über die gesamte Packstoffoberfläche in kleine Einheiten aufgeteilt vorhanden sein.

Für die Fälle, bei denen gleichzeitig eine dichte Verpackung erforderlich ist, wird die Flächenaufteilung erfindungsgemäss so gestaltet, dass die Flächenanteile, die keinen Ablösefilm tragen, d.h. bei denen die Heissiegelschicht freiliegt, ein Netz von zusammenhängenden Linien bildet, so dass vollständig dichte Siegelnähte erzeugt werden können.

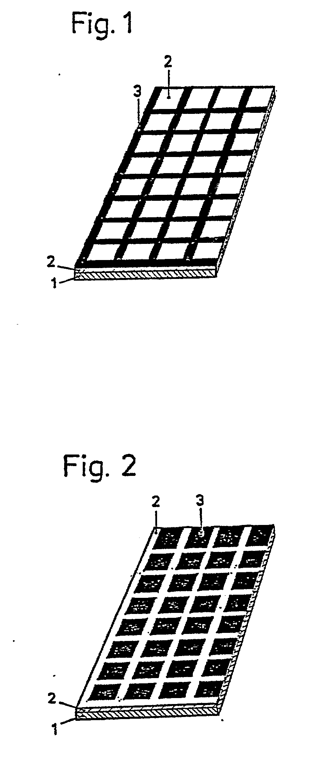

Fig. 1 zeigt schematisch eine Ausführungsform einer erfindungsgemässen Folie in perspektivischer Darstellung. Die als Trägerschicht wirkende Folie (1) trägt eine Heissiegelschicht (2). Auf die Oberfläche dieser Schicht (2) wurde ein wasserlöslicher Film (3) aufgetragen, der als Ablöseschicht dient. Diese Figur zeigt ein Beispiel, für die Flächenaufteilung zwischen Partien, welche Ablösefilm (3) tragen und solchen, bei denen die Heissiegelschicht (2) unbedeckt bleibt. Das Auftragen des Ablösefilms erfolgte mittels einer Rasterwalze, wie dies in der Folienveredlung üblich ist. Die Menge des getrockneten Ablösefilms (3) würde bei vollflächiger Bedeckung der Heissiegelschicht (2) ca. 0,1 bis 0,2 g/m2 betragen.

Fig. 2 stellt eine andere Ausführungsform einer erfindungsgemässen Folie dar. Die als Trägerschicht wirkende Folie (1) trägt ebenfalls eine Heisssiegelschicht (2).

Auf diese Schicht (2) wurde ein Ablösefilm (3) so aufgetragen, dass die Partien, an denen die Heissiegelschicht (2) frei liegt, ein ununterbrochenes Liniennetz bildet. Wenn eine solche Folie gegen ein vollflächig siegelndes Material gesiegelt wird, können dichte Nähte erzeugt werden. Unter der Voraussetzung, dass die Siegelnaht mehrere Flächenelemente, in denen die Siegelschicht (2) frei liegt, umfasst, können auch gegen gleichgemusterte Folien dichte Nähte durch Siegelung erzeugt werden.

Für die Trägerschicht, die Heiss- oder Kaltsiegelschicht und den wasserlöslichen Ablösefilm können erfindungsgemäss herkömmliche Materialien verwendet werden. Geeignete Trägermaterialien sind z.B. Metallfolien, vorzugsweise Aluminiumfolien; Kunststofffolien, z.B. aus PETP, PETB, PP, OPP, PA, PVC oder Ionomeren, und Papiere sowie Verbundfolien aus den genannten Materialien.

Als Heissiegelschichten eignen sich z.B. solche auf Basis von Hot-melts, Acrylaten und Vinylhomo- und -copolymerisaten. Geeignete Kaltsiegelschichten sind z.B. Abmischungen aus synthetischen Latices, z.B. PVA-Dispersionen, und Naturlatex.

Für den wasserlöslichen Ablösefilm können z.B. Hydrokolloide von pflanzlicher oder tierischer Herkunft, wie Gelatine und Stärkeprodukte, verwendet werden.

## Patentansprüche

1. Packstoff-Folie mit einer als Trägerschicht wirkenden Folie (1) und einer darauf aufgebrachten Siegelschicht (2), gekennzeichnet durch einen auf dieser aufgebrachten, nicht vollflächig deckenden Film (3) aus wasserlöslichem Material.

2. Folie nach Anspruch 1, dadurch gekennzeichnet, dass der Ablösefilm zwischen 30 % bis 60 % der gesamten Folienoberfläche bedeckt.

3. Folie nach Anspruch 1 oder 2, dadurch gekennzeichnet, dass der Ablösefilm in einer Schichtstärke von 0,1 g/m² bis 0,3 g/m², vorzugweise 0,15 g/m², aufgetragen ist.

4. Folie nach einem der Ansprüche 1 bis 3, dadurch gekennzeichnet, dass das Auftragsmuster des Ablösefilms so gestaltet ist, dass innerhalb einer Fläche von 5 mm mal 5 mm mindestens ein Teilbereich mit und ein Teilbereich ohne Ablösefilm ausgerüstet ist.

5. Folie nach einem der Ansprüche 1 bis 4, dadurch gekennzeichnet, dass das Auftragsmuster des Ablösefilms so gestaltet ist, dass zwischen den Partien mit Ablösefilm ein zusammenhängendes Netz von Linien frei von Ablösefilm bleibt, so dass in diesen Linien die Siegelschicht unbedeckt bleibt.

6. Folie nach einem der Ansprüche 1 bis 4, dadurch gekennzeichnet, dass das Auftragsmuster des Ablösefilms so gestaltet ist, dass dieser ein zusammenhängendes Netz von Linien bildet.

7. Folie nach einem der Ansprüche 1 bis 6, dadurch gekennzeichnet, dass die Siegelschicht eine Heissiegelung ermöglicht.

8. Folie nach einem der Ansprüche 1 bis 6, dadurch gekennzeichnet, dass die Siegelschicht eine Kaltsiegelung ermöglicht, d.h. ein Siegeln ohne erhöhte Temperatureinwirkung durch blosses Anpressen.

9. Folie nach einem der Ansprüche 1 bis 8, dadurch gekennzeichnet, dass die Folien-Aussenseite nicht bedruckt ist.

10. Folie nach einem der Ansprüche 1 bis 8, dadurch gegekennzeichnet, dass die Folien-Aussenseite bedruckt ist.

11. Verwendung der Folie nach einem der Ansprüche 1 bis 10 als Verpackungsfolie für pastöse Produkte mit wässriger Phase, insbesondere Schmelzkäse.

## Claims

1. A packaging sheet comprising a sheet (1) serving as support layer and a sealing layer (2) provided thereon, characterized by a film (3) of water-soluble material which is provided thereon without covering its entire surface.

2. A sheet according to claim 1, characterized in that said release film covers from 30% to 60% of the total surface of the sheet.

3. A sheet according to claim 1 or 2, characterized in that said release film is provided in a thickness of from 0.1 g/m² to 0.3 g/m², preferably 0.15 g/m².

4. A sheet according to one of claims 1 to 3, characterized in that the application pattern of said release film is structured in such a way that within an area of 5 x 5 mm at least one section is provided with and one section is without said release film.

5. A sheet according to one of claims 1 to 4, characterized in that the application pattern of said release film is structured in such a manner that between areas provided with said release film a coherent net of lines remains free from said release film, leaving the sealing layer uncoated at these lines.

6. A sheet according to one of claims 1 to 4, characterized in that the application pattern of said release film is structured in such a manner that a coherent net of lines is formed.

7. A sheet according to one of claims 1 to 6, characterized in that said sealing layer allows hot sealing.

8. A sheet according to one of claims 1 to 6, characterized in that said sealing layer allows cold sealing, i.e., sealing by simple pressing and without application of increased temperatures.

9. A sheet according to one of claims 1 to 8 characterized in that the outer face of the sheet is not printed.

10. A sheet according to one of claims 1 to 8 characterized in that the outer face of the sheet is printed.

11. The use of a sheet according to one of claims 1 to 10 as packaging sheet for pasteous products having an aqueous phase, particularly for cheese spread.

## Revendications

1. Feuille d'emballage comportant une feuille (1) agissant comme couche de support et une feuille de scellement (2) qui lui est superposée, caractérisée par un film (3) en matière soluble dans l'eau, superposé à celle-ci, ne la recouvrant pas totalement.

2. Feuille selon la revendication 1, caractérisée en ce que le film détachable recouvre de 30 à 60% de l'ensemble de la surface de feuille.

3. Feuille selon la revendication 1 ou 2, caractérisée en ce que le film détachable est rapporté sur une épaisseur de couche de 0,1 g/m² à 0,3 g/m², de préférence 0,15 g/m².

4. Feuille selon l'une des revendications 1 à 3, caractérisée en ce que le motif d'apport de film détachable est constitué de telle façon qu'à l'intérieur d'une surface de 5 mm x 5 mm au moins une zone partielle est revêtue de film détachable, et une zone partielle ne l'est pas.

5. Feuille selon l'une des revendications 1 à 4, caractérisée en ce que le motif d'apport du film détachable est consitué de telle façon qu'entre les parties revêtues de film détachable il subsiste un réseau continu de lignes exempt de film détachable, de sorte que dans ces lignes la couche de scellement restent non couvertes.

6. Feuille selon l'une des revendications 1 à 4, caractérisée en ce que le motif d'apport du film détachable est constitué de telle façon que celui-ci crée un réseau de lignes d'un seul tenant.

7. Feuille selon l'une des revendications 1 à 6, caractérisée en ce que la couche de scellement permet un scellement à chaud.

8. Feuille selon l'une des revendications 1 à 6, caractérisée en ce que la couche de scellement permet un scellement à froid, c'est-à-dire un scellement sans action de température élevée par simple pression.

9. Feuille selon l'une des revendications 1 à 8, caractérisée en ce que la face extérieure de feuille n'est pas imprimée.

10. Feuille selon l'une des revendications 1 à 8, caractérisée en ce que la face extérieure de feuille est imprimée.

11. Utilisation de la feuille selon l'une des revendications 1 à 10 comme feuille d'emballage pour des produits pâteux à phase aqueuse, en particulier du fromage fondu.

# Fig. 1

# Fig. 2